# EUROPÄISCHE PATENTSCHRIFT

(11) **EP 3 064 540 B1**
(45) Veröffentlichungstag und Bekanntmachung des Hinweises auf die Patenterteilung: **23.05.2018**
(21) Anmeldenummer: 16155615.4
(22) Anmeldetag: 15.02.2016
(51) Int. Cl.: C08K 5/00, C07F 9/30, C08K 5/101, C09K 21/12, C08K 5/5313, C08L 1/10, C08L 1/12, C08L 1/14, C08K 5/5398

(54) **FLAMMWIDRIGE CELLULOSE-ESTER-ZUBEREITUNGEN**
FLAME RETARDANT CELLULOSE-ESTER PREPARATIONS
PREPARATIONS D'ESTER DE CELLULOSE IGNIFUGEES

(30) Priorität: 05.03.2015 EP 15157773
(43) Veröffentlichungstag der Anmeldung: 07.09.2016
(73) Patentinhaber: LANXESS Deutschland GmbH, 50569 Köln (DE)
(72) Erfinder: HANSEL, Jan-Gerd, 51469 Bergisch Gladbach (DE); TEBBE, Heiko, 41539 Dormagen (DE); MAUERER, Otto, 42799 Leichlingen (DE)

(56) Entgegenhaltungen:
- WO-A1-2014/002720
- DE-A1-102007 028 593
- US-A- 4 127 590
- US-A- 4 137 201
- R.A. STOCKLAND JR. ET AL.: ORGANIC LETTERS, Bd. 7, Nr. 5, 2. Oktober 2005 (2005-10-02) , Seiten 851-853, XP002741078, DOI: 10.1021/ol0474047
- EUROPEAN POLYMER JOURNAL, Bd. 47, 2011, Seiten 1081-1089, XP002741079,

## Beschreibung

Die vorliegende Erfindung betrifft Cellulose-Ester-Zubereitungen, die phosphorhaltige Propionsäurederivate als flammwidrige Weichmacher enthalten.

Die Ester der Cellulose mit kurzkettigen, aliphatischen Carbonsäuren werden seit langem industriell als Werkstoffe genutzt. Typische Beispiele dieser Cellulose-Ester sind Cellulose-Acetat, Cellulose-Propionat, Cellulose-Butyrat sowie gemischte Ester, wie Cellulose-Acetat-Propionat oder Cellulose-Acetat-Butyrat. Ihre Herstellung und Verarbeitung sind bekannt, beispielsweise aus K. Balser, L. Hoppe, T. Eicher, M. Wandel, H.-J. Astheimer und H. Steinmeier: "Cellulose Esters", Ullmann's Encyclopedia of Industrial Chemistry Release 2005, Electronic Release, 7th ed., chap. 2 ("Organic Esters"), Wiley-VCH, Weinheim 2005.

Cellulose-Ester können zu thermoplastischen Formmassen, Schaumstoffen, Folien, Filmen, Beschichtungen, Lacken und Fasern verarbeitet werden. Dabei werden häufig Weichmacher zugesetzt, um die mechanischen Eigenschaften des Werkstoffs zu verbessern und die für die Verarbeitung erforderliche Temperatur abzusenken.

In manchen Anwendungen, beispielsweise im Elektro- und Elektronikbereich, wird gefordert, dass die aus weichgemachten Cellulose-Ester-Zubereitungen hergestellten Produkte bestimmte Flammschutzanforderungen einhalten. Dies wird typischer Weise dadurch erreicht, dass der eingesetzte Weichmacher gleichzeitig ein Flammschutzmittel darstellt. Aus dem Stand der Technik bekannte Beispiele für derartige flammwidrige Weichmacher sind Arylphosphate, wie Triphenylphosphat (vgl. US 1,981,312) oder Resorcin-bis(diphenylphosphat) (vgl. WO 9205219 A1), Alkylphosphate, wie Triethylphosphat (vgl. US 2,617,737) oder Alkylen-bis(phosphate) (vgl. US 2,782,128) und Chloralkylphosphate, wie Tris(chlorethyl)phosphat (vgl. US 2,618,568), oder halogenhaltige Phthalsäureester (vgl. US 2,062,403).

Die Arylphosphate und insbesondere Triphenylphosphat haben hier eine herausragende Bedeutung, da sie einer Cellulose-Ester-Zubereitung neben der flammwidrigen Ausrüstung weitere nützliche Eigenschaften verleihen, beispielsweise eine verringerte Wasserdampf-Durchlässigkeit (vgl. US 2003/0118754 A1). Die aus dem Stand der Technik bekannten flammwidrigen Weichmacher sind jedoch mit bestimmten Nachteilen behaftet. So ist die Verträglichkeit von Arylphosphaten mit Cellulose-Estern begrenzt. Dies kann dazu führen, dass der Weichmacher aus der Cellulose-Ester-Zubereitung ausschwitzt. Um dem zu begegnen, müssen Arylphosphate oft zusammen mit herkömmlichen Weichmachern angewendet werden, die allerdings keine flammwidrigen Eigenschaften haben. Weichmachende Alkylphosphate weisen oft auch eine zu hohe Flüchtigkeit auf, was zum Beispiel die Dimensionsstabilität der aus der Cellulose-Ester-Zubereitung hergestellten Produkte verringert.

Ein weiterer Nachteil der flammwidrigen Weichmacher aus dem Stand der Technik wird in ihren potentiell nachteiligen Auswirkungen auf Mensch und Umwelt gesehen. Triphenylphosphat ist sehr giftig für Wasserorganismen mit langfristiger Wirkung (GHS-Kennzeichnung H410). Tris(chlorethyl)phosphat kann vermutlich Krebs erzeugen (GHS-Kennzeichnung H351). Bromhaltige Weichmacher, wie z. B Tetrabrom-bis(2-ethylhexyl)phthalat, stehen im Verdacht, persistent und bioakkumulierend zu sein. Cellulose-Ester-Zubereitungen mit derartigen Weichmachern werden in verbrauchernahen Anwendungen immer weniger akzeptiert.

Daher besteht ein Bedarf an flammwidrigen Weichmachern, die mit Cellulose-Estern gut verträglich sind, keine Halogenverbindungen und keine Arylphosphate enthalten. Typische Eigenschaften von Kunststoffen auf Basis von Cellulose-Estern, wie beispielsweise Transparenz und Lichtechtheit, sollten möglichst wenig beeinträchtigt werden.

Aus US 4,137,201 sind bereits Cellulose-Ester-Zubereitungen bekannt, die als thermischen Stabilisator eine Kombination aus bestimmten 9,10-Dihydro-9-oxa-10-phosphaphenanthren-10-oxid-Derivaten, Antioxidantien und Säure bindenden Epoxyverbindungen enthalten.

Diese thermischen Stabilisatoren werden in Mengen von 0,10 bis 1,0 Teilen, bevorzugt 0,10 - 0,30 Teilen, bezogen auf 100 Teile Cellulose-Ester eingesetzt. Thermische Stabilisatoren sind Substanzen, die man in Kunststoffmassen einarbeitet, um dem Verlust an ästhetischen oder mechanischen Eigenschaften dieser Kunststoffmassen durch Wärmeeinfluss während des Produktlebenszyklus entgegen zu wirken.

Es ist Aufgabe der vorliegenden Erfindung, eine flammwidrige, weichgemachte Cellulose-Ester-Zubereitung zur Verfügung zu stellen, die die genannten Nachteile des Standes der Technik überwindet.

Es wurde gefunden, dass sich unter Verwendung bestimmter, phosphorhaltiger Propionsäurederivate Cellulose-Ester-Zubereitungen herstellen lassen, die flammwidrige Eigenschaften aufweisen und darüber hinaus auch weichgemacht sind. Überraschender Weise benötigen die neuen Cellulose-Ester-Zubereitungen keine zusätzlichen Weichmacher und erreichen eine Flammwidrigkeit auf dem Niveau des Stands der Technik, ohne dass dafür Halogenverbindungen oder Arylphosphate notwendig sind.

Gegenstand der vorliegenden Erfindung ist eine Cellulose-Ester-Zubereitung, dadurch gekennzeichnet, dass sie
a) mindestens einen Cellulose-Ester und
b) mindestens ein phosphorhaltiges Propionsäurederivat der Formel (I) 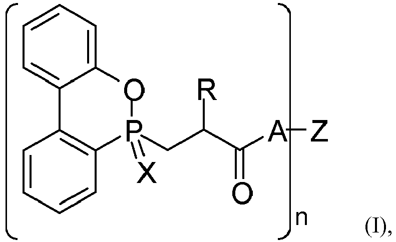 worin
   - X: für Sauerstoff oder Schwefel, bevorzugt für Sauerstoff steht,
   - R: für Wasserstoff oder Methyl, bevorzugt für Wasserstoff steht,
   - A: für Sauerstoff oder NH, bevorzugt für Sauerstoff steht,
   - Z: für einen n-valenten gesättigten, geradkettigen oder verzweigten, aliphatischen Kohlenwasserstoffrest mit 1 - 20 Kohlenstoffatomen, der gegebenenfalls durch ein oder mehrere Heteroatome aus der Reihe Sauerstoff und Schwefel unterbrochen ist, oder für einen n-valenten, gegebenenfalls ein- oder mehrfach, gleich oder verschieden, substituierten 5- oder 6-gliedrigen heterocyclischen, Ring der als Heteroatome ein bis drei Stickstoffatome enthält, steht,
   und
   - n: für eine ganze Zahl von 1 bis 4 steht,
   enthält.

Als Substituenten für den gegebenenfalls substituierten n-valenten 5- oder 6-gliedrigen heterocyclischen Ring in der Bedeutung von Z kommen bevorzugt C₁-C₄- Alkylreste, insbesondere Methyl und Ethyl, C₁-C₄-Alkoxyreste, insbesondere Methoxy und Ethoxy, und C₁-C₄-Alkylenreste, insbesondere Methylen und Ethylen in Frage.

Bevorzugt enthält die erfindungsgemäße Cellulose-Ester-Zubereitung
mindestens ein phosphorhaltiges Propionsäurederivat der Formel (I)
worin
- Z: für einen n-valenten gesättigten, geradkettigen oder verzweigten aliphatischen Kohlenwasserstoffrest mit 1 bis 10 Kohlenstoffatomen, der gegebenenfalls durch ein bis vier Heteroatome aus der Reihe Sauerstoff und Schwefel unterbrochen ist, oder für einen n-valenten, gegebenenfalls ein- bis dreifach, gleich oder verschieden, substituierten 5- oder 6-gliedrigen heterocyclischen Ring, der als Heteroatome ein bis drei Stickstoffatome enthält,
steht.

Besonders bevorzugt enthält die erfindungsgemäße Cellulose-Ester-Zubereitung
mindestens ein phosphorhaltiges Propionsäurederivat der Formel (I)
worin
- Z: für einen n-valenten gesättigten, geradkettigen oder verzweigten aliphatischen Kohlenwasserstoffrest mit 1 bis 6 Kohlenstoffatomen, der gegebenenfalls durch ein oder zwei Sauerstoffatome unterbrochen ist, oder für einen n-valenten, gegebenenfalls ein- bis dreifach, gleich oder verschieden, substituierten 5- oder 6-gliedrigen heterocyclischen Ring, der als Heteroatome ein bis drei Stickstoffatome enthält,
steht.

In den ganz besonders bevorzugten Ausführungsformen (1a) bis (1d) enthält die erfindungsgemäße Cellulose-Ester Zubereitung mindestens ein phosphorhaltiges Propionsäurederivat der Formel (I), worin die Reste X, R, A, Z und der Index n jeweils die in folgender Tabelle für die jeweilige Ausführungsform angegebenen Bedeutungen haben:

| Ausführungsform | X | R | A | Z | n |
|---|---|---|---|---|---|
| (1a) | O | H | O | Methyl, Ethyl, n-Propyl, Isopropyl, n-Butyl, Isobutyl, 2-Ethylhexyl, Isooctyl, n-Nonyl, Isononyl, 2-Propylheptyl, n-Decyl oder Isodecyl | 1 |
| (1b) | O | H | O | -CH₂CH₂-, -CH₂CH₂CH₂-, -CH₂CH(CH₃) -, -CH₂CH₂CH₂CH₂-, -CH₂CH₂CH(CH₃)-, -CH₂C(CH₃)₂CH₂-, -CH₂CH₂CH₂CH₂CH₂CH₂- oder -CH₂CH₂-O-CH₂CH₂- | 2 |
| (1c) | O | H | O | (-CH₂)₃CCH₃ oder | 3 |
| | | | | 1,3,5-Tris(ethylen)-1,3,5-triazin-2,4,6-trion | |
| (1d) | O | H | O | (-CH₂)₄C | 4 |

Die erfindungsgemäße Cellulose-Ester Zubereitung kann die phosphorhaltigen Propionsäurederivate der Formel (I) einzeln oder in beliebiger Mischung untereinander enthalten. Die in der erfindungsgemäßen Cellulose-Ester Zubereitung enthaltenen Propionsäurederivate der Formel (I) sind zum Teil bekannt (vgl. z.B. DE-A 26 46 218 und Organic Letters 2005, Vol. 7, No. 5, Supplementary Information S8).

Die phosphorhaltigen Propionsäurederivate der Ausführungsform (1a) worin in Formel (I) X für O steht, R für H steht, A für O steht, n für 1 steht und Z für einen 2-Ethylhexyl-, Isooctyl-, n-Nonyl-, Isononyl-, 2-Propylheptyl-, n-Decyl- oder Isodecylrest steht sind neu und ebenfalls Gegenstand der vorliegenden Erfindung.

Die phosphorhaltigen Propionsäurederivate der Ausführungsform (1b), worin in Formel (I) X für O steht, R für H steht, A für O steht, n für 2 steht und Z für einen Rest -CH₂CH₂-, -CH₂CH₂CH₂-, -CH₂CH(CH₃) -, -CH₂CH₂CH₂CH₂-, -CH₂CH₂CH(CH₃)-, -CH₂C(CH₃)₂CH₂-, -CH₂CH₂CH₂CH₂CH₂CH₂- oder -CH₂CH₂-O-CH₂CH₂- steht, sind ebenenfalls neu und Gegenstand der vorliegenden Erfindung.

Die neuen und bekannten Propionsäurederivate der Formel (I) können als flammwidrige Weichmacher für Cellulose-Ester-Zubereitungen verwendet werden. Gegenstand der vorliegenden Erfindung ist daher die Verwendung von phosphorhaltigen Propionsäurederivaten der Formel (I) als Flammschutzmittel mit weichmachenden Eigenschaften für Cellulose-Ester-Zubereitungen.

Die neuen und bekannten phosphorhaltigen Propionsäurederivate der Formel (I) worin n für 1 steht können in an sich bekannter Art und Weise, z.B. nach den in DE-A 26 46 218 und Organic Letters 2005, Vol. 7, No. 5, Supplementary Information S8 beschriebenen Verfahren hergestellt werden; beispielsweise durch Umsetzung von 9,10-Dihydro-9-oxa-10-phosphaphenanthren-10-oxid mit entsprechenden Acrylsäureestern bei einer Temperatur von 35 bis 65 °C und Normaldruck.

Die Ausgangsstoffe 9,10-Dihydro-9-oxa-10-phosphaphenanthren-10-oxid und Acrylsäureester sind kommerziell erhältlich.

Die neuen und bekannten phosphorhaltigen Propionsäurederivate der Formel (I) worin n für 2, 3 oder 4 steht lassen sich in analoger Weise durch Umsetzung von 9,10-Dihydro-9-oxa-10-phosphaphenanthren-10-oxid mit den Acrylsäureestern der entsprechenden bi-, tri- oder tetravalenten Polyole erhalten, wie beispielsweise aus European Polymer Journal, 2011, Volume 47, Seiten 1081 - 1089 bekannt ist.

Bei den in der erfindungsgemäßen Cellulose-Ester Zubereitung enthaltenen Cellulose-Estern handelt es sich vorzugsweise um Cellulose-Acetat, Cellulose-Triacetat, Cellulose-Propionat, Cellulose-Butyrat, Cellulose-Acetat-Propionat oder Cellulose-Acetat-Butyrat, Cellulose-Acetat-Phthalat, Carboxymethylcellulose-Acetat, Carboxymethylcellulose-Butyrat oder um eine Zubereitung aus Mischungen dieser Cellulose-Ester. Besonders bevorzugt handelt es sich um eine Cellulose-Acetat Zubereitung.

Der Substitutionsgrad (degree of substitution, DS) der Cellulose-Ester beträgt 1,0 - 3,0 Acylgruppen pro Anhydro-Glucose-Einheit. Der DS kann nach dem Fachmann bekannten Methoden bestimmt werden, beispielsweise durch Titration der veresterten Acylgruppen gemäß ASTM D 871-96 und Berechnung des DS aus dem Acylgruppengehalt.

Bevorzugt handelt es sich bei der erfindungsgemäßen Zubereitung um eine Cellulose-Acetat Zubereitung mit einem Substitutionsgrad von 2,0 bis 3,0 Acetylgruppen pro Anhydro-Glucose-Einheit.

Die erfindungsgemäße Zubereitung enthält im Allgemeinen 5 - 60 Gewichtsteile an phosphorhaltigen Propionsäurederivaten der Formel (I) bezogen auf 100 Gewichtsteile Cellulose-Ester. Bevorzugt enthält die erfindungsgemäße Zubereitung 10 - 50 Gewichtsteile des phosphorhaltigen Propionsäurederivats der Formel (I) bezogen auf 100 Gewichtsteile Cellulose-Ester.

Die erfindungsgemäße Cellulose-Ester-Zubereitung kann gegebenenfalls zusätzlich einen oder mehrere Hilfs- und/oder Zusatzstoffe enthalten oder jeweils auch nicht enthalten. Als solche Hilfs- oder Zusatzstoffe kommen beispielweise in Frage:
1. Weichmacher, wie beispielsweise Alkylester der Benzoesäure, Phthalsäure, Terephthalsäure, Cyclohexan-1,2-dicarbonsäure, Trimellitsäure, Bernsteinsäure, Adipinsäure, Sebacinsäure, Acelainsäure, Zitronensäure, Acetylzitronensäure, Phosphorsäure, Alkylenester der Benzoesäure, Isosorbitester, aus Diolen, Dicarbonsäuren und gegebenenfalls Monoolen und Monocarbonsäuren erhältliche Polyester, epoxidierte Fettsäureester, Glycerinester der Essigsäure und Fettsäuren, Phenylester von Alkansulfonsäuren oder Mischungen davon.
2. UV-Stabilisatoren, wie beispielsweise Benzotriazole, Triazine, Hydroxybenzophenone, Benzoxazinone, Resorcin-monobenzoate, Salicylate, Zimtsäurederivate, Oxanilide, Hydroxybenzoesäureester, sterisch gehinderte Amin-Lichtabsorber ("HALS") oder Mischungen davon.
3. Thermische Stabilisatoren und/oder Antioxidantien, wie beispielsweise sterisch gehinderte Phenole, sterisch gehinderte Amine, Epoxide natürlicher Öle, organische Phosphite oder Mischungen davon.
4. Farbmittel, wie beispielsweise lösliche Farbstoffe, organische Pigmente, anorganische Pigmente oder Mischungen davon.
5. Füllstoffe, wie beispielsweise anorganische Füllstoffe auf Basis von Siliciumdioxid, Aluminiumoxid, Aluminiumoxidhydroxid, Boehmit, Silikate, Talkum oder organische Füllstoffe auf Basis von Holz oder Pflanzenfasern oder Mischungen davon.
6. Polymere, wie beispielsweise Polyacrylate, Polymethacrylate, Ethylen-VinylacetatCopolymere oder Mischungen davon.
7. Treibmittel, wie beispielsweise physikalische Treibmittel wie Kohlendioxid, Stickstoff, Propan, Butan, Pentan, Ethanol, Propanol oder chemische Treibmittel wie Zitronensäure/Bicarbonat-Mischungen.
8. Duftstoffe, Biozide, Pestizide, Verarbeitungshilfsmittel und/oder Gleitmittel.
9. Flammschutzmittel, beispielsweise solche aus der Reihe der
   a) organischen Phosphorverbindungen, wie beispielsweise Triethylphosphat, aliphatische Bisphosphate, Dimethylmethanphosphonat, Diethylethanphosphonat, Dimethylpropanphosphonat, oligomere Phosphate oder Phosphonate, Hydroxylgruppen-haltige Phosphorverbindungen, 5,5-Dimethyl-1,3,2-dioxaphosphorinan-2-oxid-Derivate, 6H-Dibenz[c,e][1,2]oxa-phosphorin-6-oxid-Derivate, wie z. B. N¹,N²-bis(6-oxido-6H-dibenz[c,e][1,2]oxaphosphorin-6-yl)-1,2-ethandiamin, Phosphazene,
   b) organischen und anorganischen, salzartigen Phosphorverbindungen, wie beispielsweise Ammoniumphosphat, Ammoniumpolyphosphat, Ethylendiaminphosphat, Melaminphosphat, Melaminpolyphosphat, Metall-Melamin-Polyphosphate, Metallsalze von Dialkylphosphinsäuren, Metallsalze von Alkanphosphonsäuren,
   c) Stickstoffverbindungen, wie beispielsweise Melamin, Melamincyanurat, und
   e) anorganischen Flammschutzmittel, wie beispielsweise Aluminiumhydroxid, Boehmit, Magnesiumhydroxid, Blähgraphit oder Tonmineralien.

Die erfindungsgemäße Cellulose-Ester-Zubereitung kann nach den in der Verarbeitung von Cellulose-Estern bekannten Methoden hergestellt werden. Beispielsweise kann sie hergestellt werden, indem der Cellulose-Ester, das phosphorhaltige Propionsäurederivat der Formel (I) und gegebenenfalls ein oder mehrere Hilfs- und/oder Zusatzstoffe, vorzugsweise bei einer Temperatur von 0 bis 100 °C, innig vermischt werden und die dabei erhaltene Mischung dann, vorzugsweise bei einer Temperatur von 100 bis 280 °C, homogenisiert wird. Für die Homogenisierung können die üblichen Aggregate, wie beispielsweise Ein- oder Zwei-Schnecken-Extruder, Walzen oder Kneter eingesetzt werden. Die so erhaltene Cellulose-Ester-Zubereitung kann in weiteren Verarbeitungsschritten granuliert, pelletiert oder anders konfektioniert werden.

Nach einer alternativen Herstellungsmethode werden die Komponenten der Cellulose-Ester-Zubereitung in Gegenwart eines Lösungsmittels homogenisiert. Geeignete Lösungsmittel sind Methanol, Ethanol, Isopropanol, Aceton, Butanon, Ethylacetat, Butylacetat, Dichlormethan, Toluol und Mischungen davon.

Die dabei erhaltene Lösung kann direkt zur Herstellung von thermoplastischen Filmen, Folien, Beschichtungen und Lacken verwendet werden. Dabei kann beispielsweise die Lösung in eine gewünschte Form gebracht werden, z.B. als Flüssigkeitsfilm auf einer Fläche ausgebreitet werden oder in einem Raumkörper verteilt werden. Nach dem Verdampfen des Lösungsmittels verbleibt ein thermoplastischer Celluloseacetat-Film in Form dieser Fläche oder Raumform.

Die so hergestellten Lösungen sind ebenfalls Gegenstand der Erfindung. Bevorzugt enthalten die erfindungsgemäßen Lösungen mindestens ein organisches Lösungsmittel, insbesondere mindestens ein organisches Lösungsmittel ausgewählt aus der Reihe Methanol, Ethanol, Isopropanol, Aceton, Butanon, Ethylacetat, Butylacetat, Dichlormethan und Toluol.

Die erfindungsgemäße Cellulose-Ester-Zubereitung kann nach den zur Verarbeitung von thermoplastischen Kunststoffen bekannten Methoden weiter verarbeitet werden, beispielsweise zur Herstellung von flammwidrig ausgerüsteten Formteilen, Folien, Filme, Beschichtungen, Lacke und Fasern. Bevorzugt wird sie durch Extrusion oder Spritzguss weiter verarbeitet. Ebenfalls bevorzugt ist die Verarbeitung durch Pressen, wobei eine homogene Mischung der genannten Bestandteile, zum Beispiel in Form von Walzfellen oder Folien, unter Druck thermoplastisch umgeformt wird und in eine gewünschte Form gebracht wird. Unter Verwendung einer Presse können mit dieser Methode beispielsweise Platten definierter Dicke hergestellt werden. Unter Verwendung der oben genannten Treibmittel lassen sich nach an sich bekannten Methoden Schaumstoffe herstellen.

Gegenstand der vorliegenden Erfindung ist ferner die Verwendung von erfindungsgemäßen Cellulose-Ester-Zubereitungen zur Herstellung von flammwidrig ausgerüsteten Formteilen, Folien, Filme, Beschichtungen, Lacke und Fasern sowie die so hergestellten Formteilen, Folien, Filme, Beschichtungen, Lacke und Fasern und deren Weiterverarbeitungsprodukte.

Die so hergestellten extrudierten oder spritzgegossenen Formteile, massiven Platten, Schaumplatten, Schaumfolien, Folien, Filme, Beschichtungen, Lacke und Fasern werden eingesetzt im Elektro- und Elektronik-Bereich, beispielsweise in Gehäuseteilen, Schaltern oder Steckern, im Baubereich, beispielsweise als Dämmstoffe, und im Fahrzeugbau, beispielsweise in Verkleidungen, Einstiegsleisten, Fußmatten, Kofferraumteppichen, Sitzbezügen, Karosserieteilen, Spoilern oder als Zierleisten.

Weiterer Gegenstand der vorliegenden Erfindung ist Verwendung von erfindungsgemäßen Formteilen zur Herstellung von Gehäuseteilen, Schaltern, Steckern, Dämmstoffen, Verkleidungen, Einstiegsleisten, Fußmatten, Kofferraumteppichen, Sitzbezügen, Karosserieteilen, Spoilern oder Zierleisten.

Anhand der nachfolgenden Beispiele wird die Erfindung näher erläutert.

### Beispiele

Die im Folgenden genannten Teile beziehen sich auf das Gewicht.

### Herstellung des phosphorhaltigen Propionsäureesters der Formel (I) mit X = O, R = H, A = O, Z = n-Butyl und n = 1

6-Oxo-6H-dibenz[c,e][1,2]oxaphosphorin-6-propionsäure-n-butylester wurde gemäß dem Verfahren aus Organic Letters 2005, Vol. 7, No. 5, Supplementary Information S8, durch Umsetzung von 6H-Dibenz[c,e][1,2]oxaphosphorin-6-oxid mit n-Butylacrylat hergestellt. Es wurde eine farblose Flüssigkeit mit einer Viskosität von 6500 mPas bei 23 °C erhalten.

### Herstellung von Cellulose-Ester-Zubereitungen

**Tabelle 1: Verwendete Rohstoffe zur Herstellung von Cellulose-Ester-Zubereitungen**

| Komponente | Bezeichnung | Beschreibung |
|---|---|---|
| A | Cellulose-Acetat | Rohcellulose-Acetat, unmodifiziert, Substitutionsgrad 2,5 Acetylgruppen pro Anhydro-Glucose-Einheit. |
| B | Vulkanox BHT | Antioxidans |
| C | Aceton | Lösemittel |
| F1 | Disflamoll® TP | Triphenylphosphat, Flammschutzmittel und Weichmacher, von Lanxess |
| F2 | Levagard® TP LXS 51078 | Phosphatesterzubereitung auf Basis von Diethylengly-col-bis(diethylphosphat), Flammschutzmittel und Weichmacher, von Lanxess |
| F3 | RDP | Resorcin-bis(diphenylphosphat), Flammschutzmittel und Weichmacher, von Yoke |
| F4 | Uniplex FRP 45 | Tetrabrom-bis(2-ethylhexyl)phthalat, Flammschutzmittel und Weichmacher, von Lanxess |
| F5 | Phosphorhaltiger Propionsäureester der Formel (I) mit X = O, R = H, A = O, Z = n-Butyl und n = 1 | Flammschutzmittel und Weichmacher, Herstellung siehe oben |

### Herstellung von Lösungen der Cellulose-Ester-Zubereitungen

Lösemittel, Flammschutzmittel und Antioxidans gemäß Tabelle 1 werden in den in Tabelle 2 angegebenen Mengenverhältnissen in einem Glaskolben vorgelegt. Unter leichtem Erwärmen im Wasserbad auf etwa 40 bis 50 °C wird die in Tabelle 2 angegebene Menge Cellulose-Acetat-Pulver unter ständigem Rühren zugegeben, so dass sich keine Gelklümpchen bilden. Nach ca. 5 Stunden erhält man eine klare, partikelfreie Lösung, die sich zur Herstellung von Gießfolien eignet.

### Verarbeitung der Cellulose-Ester-Zubereitung zu Folien

Ca. 150 g der Lösung werden in eine waagerechte, oben offene Gußform von 20 x 20 cm eingegossen. Das Lösemittel lässt man langsam, mindestens über einen Zeitraum von einem Tag abdampfen. Die gebildete Folie wird aus der Form entnommen und zum Entfernen von darin verbliebenem Lösemittel in einem Heissluftofen bei 60 bis 70 °C getrocknet. Der Trocknungsvorgang kann mehrere Stunden dauern. Er ist beendet, wenn die Folienproben lösemittelfrei sind, d. h. kein Gewicht mehr verlieren.

Aus den Cellulose-Ester-Folien werden Prüfkörper, wie z. B. Schulterstäbe, gestanzt. Die Prüfkörper waren homogen, d. h. blasenfrei und von gleichmässiger Dicke. Vorzugsweise werden die Prüfkörper aus der Folienmitte entnommen.

### Verarbeitung der Cellulose-Ester-Zubereitung durch thermoplastische Umformung

In einer hydraulischen Presse werden Cellulose-Ester-Folien durch thermoplastische Umformung bei 170 - 180 °C zu 2 mm dicken, transparenten und blasenfreien Platten verpresst. Aus den Platten werden Prüfkörper für die Brandprüfungen nach der UL 94-Methode gesägt.

### Bestimmung der Flammwidrigkeit

Die Cellulose-Ester-Zubereitungen werden auf ihr Brandverhalten in Anlehnung an UL 94 ("Standard Test for Flammability of Plastic Materials for Parts in Devices and Applications" der Underwriters Laboratories) geprüft. Dazu werden je fünf Prüfkörper mit einer Abmessung von ca. 125 * 12,5 * 2,0 mm vertikal in einer Halterung eingespannt und zweimal nacheinander mit einer Kleinbrennerflamme beflammt. Kein Prüfkörper darf bis zur Halteklammer abbrennen.

Wenn die Summe der Nachbrennzeiten in einer Serie von fünf Prüfkörpern aus einer Rezeptur weniger als 50 s beträgt, kein Prüfkörper nach Beflammungsende mehr als 10 s nachbrennt, mehr als 30 s nachglüht und kein Prüfkörper brennend abtropft, so wird die Rezeptur der Klasse V-0 zugeordnet.

Wenn die Summe der Nachbrennzeiten in einer Serie von fünf Prüfkörpern aus einer Rezeptur weniger als 250 s beträgt, kein Prüfkörper nach Beflammungsende mehr als 30 s nachbrennt, mehr als 60 s nachglüht und kein Prüfkörper brennend abtropft, so wird die Rezeptur der Klasse V-1 zugeordnet.

Wenn die Summe der Nachbrennzeiten in einer Serie von fünf Prüfkörpern aus einer Rezeptur weniger als 250 s beträgt, kein Prüfkörper nach Beflammungsende mehr als 30 s nachbrennt, mehr als 60 s nachglüht und die Prüfkörper brennend abtropfen, so wird die Rezeptur der Klasse V-2 zugeordnet.

### Prüfergebnisse zu Cellulose-Ester-Zubereitungen

**Tabelle 2: Zusammensetzung (Gewichtsteile) und Prüfergebnisse des erfindungsgemäßen Beispiels B1 und der nicht erfindunsgemäßen Vergleichsbeispiele V1 bis V4 zu Cellulose-Ester-Zubereitungen.**

| **Beispiel** | **V1** | **V2** | **V3** | **V4** | **B1** |
|---|---|---|---|---|---|
| A | 70 | 70 | 70 | 70 | 70 |
| B | 0,3 | 0,3 | 0,3 | 0,3 | 0,3 |
| C | 270 | 270 | 270 | 270 | 270 |
| F1 | 30 | | | | |
| F2 | | 30 | | | |
| F3 | | | 30 | | |
| F4 | | | | 30 | |
| F5 | | | | | 30 |
| UL 94-Klasse | V-2 | Keine | Keine | V-2 | V-2 |
| Ascherückstand (%) | 4,6 | 18,5 | 20,2 | 6,1 | 28,1 |
| Shore D | 69,6 | 65,4 | 77,5 | 68,7 | 78,3 |

### Bestimmung der Zugfestigkeit

Die Bestimmung erfolgt in Anlehnung an DIN EN ISO 527 mit jeweils fünf aus Folien ausgestanzten S 2-Schulterstäben auf einer Lloyd Zerreissmaschine mit Laser-Dehnungsnehmer.

### Bestimmung der Shore-Härte

Die Bestimmung erfolgt mit einem Härtemessgerät der Firma Zwick nach Herstellervorgabe der Elektronikeinheit T 48. Zur Messung wurden die Folien zu etwa 5 mm dicken Prüfkörpern gestapelt.

### Bestimmung der Folienhomogenität

Die Folienhomogenität wurde durch Vergleichen der Folien in Bezug auf Transparenz, Schlieren, Gleichmässigkeit von Dicke und Oberflächenstruktur ermittelt. Die qualitativ beste Folie bekommt Rang 1, die schlechteste Rang 5.

### Bestimmung der Lichttransmission

Die Lichttransmission der Folien wurde mit einem UV/VIS-Spectrometer Lambda 12 von Perkin Elmer untersucht. Hierfür wurde die Transmission von 400 bis 1100 nm in 20 nm-Schritten in Prozent gemessen. Die über den gesamten Wellenlängenbereich gemessenen Transmissionen wurden zu einem mittleren Transmissionswert gemittelt und als Vergleichswert für die einzelnen Folien-Muster herangezogen.

### Bestimmung der Thermoalterung

Die Thermoalterung wurde in einem Mathisofen bei 200 °C bestimmt. Nach 50 min Heissluft-Exposition wurden die Folienprüfkörper ausgewertet. Da einige Folien nach der Alterung verformt und ungleichmässig verfärbt waren, konnte eine farbmetrische Messung nicht durchgeführt werden. Stattdessen wurden die Prüfkörper nach zunehmender Verfärbung geordnet. Die am wenigsten verfärbte Folie bekommt Rang 1, die am meisten verfärbte Folie bekommt Rang 5.

### Bestimmung der UV-Alterung

Die UV-Alterung wurde mit Folien in einem Suntest CPS + über 48 Stunden mit 500 kJ/m² durchgeführt. Die Auswertung erfolgte mit einem Minolta Chromameter CR 400. Gemessen wurden die L a b-Werte der Folienmuster vor und nach der Alterung. Die Farbänderung wurde bestimmt als ((Lₜ - L₀)² + (aₜ - a₀)² + (bₜ - b₀)²)^{0,5}

### Bestimmung der Thermostabilität mit DSC

Die thermische Stabilität der Cellulose-Ester-Zubereitungen wurde mit Hilfe der DSC bestimmt. Folienproben wurden unter Stickstoff von Raumtemperatur bis 500 °C mit einer Rate von 10 °C/min aufgeheizt. Als Beginn einer wesentlichen Reaktion / eines Materialabbaus wurde der erste signifikante Peak oberhalb der typischen Verarbeitungstemperatur für Cellulose-Ester von ca. 200 °C gewählt.

### Bestimmung der Thermostabilität mit TGA

Die thermische Stabilität der Cellulose-Ester-Zubereitungen wurde mit Hilfe der TGA bestimmt. Folienproben wurden unter Stickstoff von Raumtemperatur bis 500 °C mit einer Rate von 10 °C/min aufgeheizt. Oberhalb der Verarbeitungstemperaturen beginnen die Cellulose-Ester-Zubereitungen mit Abbaureaktionen, die zu Masseverlust führen. Als Maß zum Vergleich für die Stabilität wurde der Masseverlust bei 305 °C gewählt.

### Bestimmung des Ascherückstandes

Der Ascherückstand wird durch Auswiegen von Folienproben vor und nach der Lagerung in einem Muffelofen bestimmt. Hierfür werden Folienmuster in einen Porzellantiegel eingewogen, für eine Stunde bei 500 °C in den Muffelofen gegeben und anschliessend zurückgewogen.

**Tabelle 3: Zusammensetzung (Gewichtsteile) und Prüfergebnisse des erfindungsgemäßen Beispiels B2 und der nicht erfindungsgemäßen Vergleichsbeispiele V5 bis V8 zu Cellulose-Ester-Zubereitungen.**

| **Beispiel** | **V5** | **V6** | **V7** | **V8** | **B2** |
|---|---|---|---|---|---|
| A | 30 | 30 | 30 | 30 | 30 |
| B | 0,5 | 0,5 | 0,5 | 0,5 | 0,5 |
| C | 168 | 168 | 168 | 168 | 168 |
| F1 | 15 | | | | |
| F2 | | 15 | | | |
| F3 | | | 15 | | |
| F4 | | | | 15 | |
| F5 | | | | | 15 |
| Zugfestigkeit (N/mm2) | 32,5 | 17,4 | 32,6 | 9,6 | 26,8 |
| Shore A | 100 | 99 | 99 | 88 | 97 |
| Folienhomogenität (Rangfolge Qualität) | 2 | 1 | 4 | 5 | 3 |
| Licht-Transmission (%) | 82 | 64 | 2,9 | 1,2 | 90 |
| Thermoalterung (Rangfolge Qualität) | 2 | 5 | 1 | 3 | 4 |
| Farbänderung nach UV-Alterung | 18 | 7,4 | 29 | 52 | 5,3 |
| Thermostabilität DSC (Peak in °C) | 330 | 290 | 318 | 339 | 336 |
| Thermostabilität TGA (Masseverlust in %) | 23,7 | 75,2 | 8,1 | 18,9 | 14,1 |
| Ascherückstand (%) | 1,0 | 2,8 | 2,2 | 0,0 | 2,1 |

### Auswertung der Ergebnisse

Alle geprüften Flammschutzmittel und Weichmacher F1 bis F5 waren gut mit Cellulose-Acetat verträglich. Die aus ihnen hergestellten Cellulose-Acetat-Zubereitungen ließen sich problemlos zu Filmen oder durch thermoplastische Umformung zu Platten verarbeiten. Die Prüfergebnisse in den Tabellen 2 und 3 erlauben den Vergleich der erfindungsgemäßen Cellulose-Ester-Zubereitungen auf Basis von F5 mit den Zubereitungen aus dem Stand der Technik auf Basis von F1 (Triphenylphosphat, vgl. US 1,981,312), F2 (Phosphatesterzubereitung auf Basis von Diethylenglycol-bis(diethylphosphat), vgl. US 2,782,128), F3 (Resorcin-bis(diphenylphosphat), vgl. WO 9205219 A1) und F4 (Tetrabrom-bis(2-ethylhexyl)phthalat, vgl. US 2,062,403).

### Brandeigenschaften:

Gemäß Tabelle 2 erreicht die erfindungsgemäße Cellulose-Ester-Zubereitung B1 mit dem phosphorhaltigen Propionsäurederivat der Formel (I) die Klasse V-2 nach UL 94. Damit zeigt B1 die gleiche Flammwidrigkeit wie die Vergleichsbeispiele V1 mit F1 (Disflamoll® TP) und V4 mit F4 (Uniplex FRP 45).

### Thermische Stabilität:

Wie aus Tabelle 3 hervorgeht, zeigt die erfindungsgemäße Cellulose-Ester-Zubereitung B2 mit dem phosphorhaltigen Propionsäurederivat der Formel (I) eine überraschend hohe Stabilität bei thermischer Belastung. Die DSC zeigt einen Zersetzungspeak, der bei einer höheren Temperatur als der Zersetzungspeak der Zubereitung V5 mit F1 (Disflamoll® TP) liegt und nur noch von V8 mit F4 (Uniplex FRP 45) um 3 °C übertroffen wird.

Die TGA weist für die erfindungsgemäße Cellulose-Ester-Zubereitung B2 mit dem phosphorhaltigen Propionsäurederivat der Formel (I) bei 305 °C einen relativ geringen Masseverlust aus, der nur noch von Zubereitung V7 mit F3 (RDP) unterboten wird.

### Materialeigenschaften:

Die erfindungsgemäße Cellulose-Ester-Zubereitung B2 mit dem phosphorhaltigen Propionsäurederivat der Formel (I) ist, als Film verarbeitet, transparent und zeigt die höchste Licht-Transmission von allen geprüften Zubereitungen. Ebenso zeigt die Zubereitung B2 die geringste Farbänderung nach UV-Alterung von allen geprüften Zubereitungen.

### Resümee:

Überraschend ist der Befund, dass die phosphorhaltigen Propionsäurederivate der Formel (I) in den erfindungsgemäßen Zubereitungen nicht nur als Flammschutzmittel wirken, sondern gleichzeitig auch als Weichmacher. Der Zusatz von weiteren Weichmachern und/oder Flammschutzmitteln ist nicht erforderlich.

Cellulose-Acetat lässt sich also mit dem phosphorhaltigen Propionsäurederivat der Formel (I) problemlos zu den erfindungsgemäßen Cellulose-Ester-Zubereitungen verarbeiten. Diese Zubereitungen sind frei von unerwünschten halogenhaltigen oder Arylphosphat-haltigen Weichmachern. Gleichzeitig erreichen ihre Materialeigenschaften die Eigenschaften der Zubereitungen aus dem Stand der Technik und übertreffen sie in bestimmten Aspekten sogar.

So erreichen sie die gleiche Flammschutz-Klassifizierung nach UL 94 wie Cellulose-Ester-Zubereitungen mit F1 (Disflamoll® TP) oder F4 (Uniplex FRP 45). Darüber hinaus zeigen die erfindungsgemäßen Zubereitungen eine hohe thermische Stabilität. Die überraschend geringere Verfärbung bei der UV-Alterung und die hohe Lichtdurchlässigkeit belegen die Überlegenheit der erfindungsgemäßen Cellulose-Ester-Zubereitungen gegenüber den Vergleichszubereitungen in Anwendungen, bei denen es auf Transparenz ankommt.

## Patentansprüche

1. Cellulose-Ester-Zubereitung, **dadurch gekennzeichnet, dass** sie
a) mindestens einen Cellulose-Ester und
b) mindestens ein phosphorhaltiges Propionsäurederivat der Formel (I) 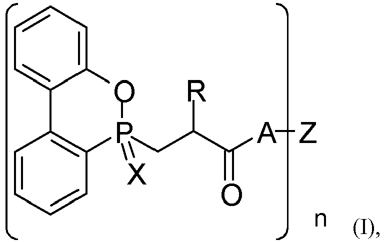 worin
X für Sauerstoff oder Schwefel, bevorzugt für Sauerstoff steht,
R für Wasserstoff oder Methyl, bevorzugt für Wasserstoff steht,
A für Sauerstoff oder NH, bevorzugt für Sauerstoff steht,
Z für einen n-valenten gesättigten, geradkettigen oder verzweigten, aliphatischen Kohlenwasserstoffrest mit 1 - 20 Kohlenstoffatomen, der gegebenenfalls durch ein oder mehrere Heteroatome aus der Reihe Sauerstoff und Schwefel unterbrochen ist, oder für einen n-valenten, gegebenenfalls einoder mehrfach, gleich oder verschieden, substituierten 5- oder 6-gliedrigen heterocyclischen Ring der als Heteroatome ein bis drei Stickstoffatome enthält, steht,
und
n für eine ganze Zahl von 1 bis 4 steht.
enthält.

2. Cellulose-Ester-Zubereitung gemäß Anspruch 1, **dadurch gekennzeichnet, dass** sie mindestens ein phosphorhaltiges Propionsäurederivat der Formel (I) gemäß Anspruch 1, enthält,
worin
X für Sauerstoff steht,
R für Wasserstoff steht, und
A für Sauerstoff steht.

3. Cellulose-Ester-Zubereitung gemäß wenigstens einem der Ansprüche 1 oder 2, **dadurch gekennzeichnet, dass** sie mindestens ein phosphorhaltiges Propionsäurederivat der Formel (I) gemäß Anspruch 1, enthält,
worin
Z für einen n-valenten gesättigten, geradkettigen oder verzweigten aliphatischen Kohlenwasserstoffrest mit 1 bis 6 Kohlenstoffatomen, der gegebenenfalls durch ein oder zwei Sauerstoffatome unterbrochen ist, oder für einen n-valenten, gegebenenfalls ein- bis dreifach, gleich oder verschieden, substituierten 5- oder 6-gliedrigen heterocyclischen Ring, der als Heteroatome ein bis drei Stickstoffatome steht.

4. Cellulose-Ester-Zubereitung gemäß wenigstens einem der Ansprüche 1 bis 3, **dadurch gekennzeichnet, dass** sie enthält
a) mindestens ein phosphorhaltiges Propionsäurederivat der Formel (I) gemäß Anspruch 1,
worin
X für Sauerstoff steht,
R für Wasserstoff steht,
A für Sauerstoff steht,
n für 1 steht,
und
Z für Methyl-, Ethyl-, n-Propyl, Isopropyl-, n-Butyl, Isobutyl-, 2-Ethylhexyl-, Isooctyl-, n-Nonyl-, Isononyl-, 2-Propylheptyl-, n-Decyl- oder Isodecylsteht,
und/oder
b) mindestens ein phosphorhaltiges Propionsäurederivat der Formel (I) gemäß Anspruch 1,
worin
X für Sauerstoff steht,
R für Wasserstoff steht,
A für Sauerstoff steht,
n für 2 steht,
und
Z für -CH₂CH₂-, -CH₂CH₂CH₂-, -CH₂CH(CH₃) -, -CH₂CH₂CH₂CH₂-, -CH₂CH₂CH(CH₃)-, -CH₂C(CH₃)₂CH₂-, -CH₂CH₂CH₂CH₂CH₂CH₂- oder -CH₂CH₂-O-CH₂CH₂- steht,
und/oder
c) mindestens ein phosphorhaltiges Propionsäurederivat der Formel (I) gemäß Anspruch 1,
worin
X für Sauerstoff steht,
R für Wasserstoff steht,
A für Sauerstoff steht,
n für 3 steht, und
Z für (-CH₂)₃CCH₃ oder 1,3,5-Tris(ethylen)-1,3,5-triazin-2,4,6-trion steht,
und/oder
d) mindestens ein phosphorhaltiges Propionsäurederivat der Formel (I) gemäß Anspruch 1,
worin
X für Sauerstoff steht,
R für Wasserstoff steht,
A für Sauerstoff steht,
n für 4 steht, und
Z für (-CH₂)₄C steht.

5. Cellulose-Ester-Zubereitung gemäß wenigstens einem der Ansprüche 1 bis 4, **dadurch gekennzeichnet, dass** sie als Cellulose-Ester a) einen oder mehrere Ester ausgewählt aus der Gruppe bestehend aus Cellulose-Acetat, Cellulose-Triacetat, Cellulose-Propionat, Cellulose-Butyrat, Cellulose-Acetat-Propionat oder Cellulose-Acetat-Butyrat, Cellulose-Acetat-Phthalat, Carboxymethylcellulose-Acetat und Carboxymethylcellulose-Butyrat enthält.

6. Cellulose-Ester-Zubereitung gemäß wenigstens einem der Ansprüche 1 bis 5, **dadurch gekennzeichnet, dass** der Cellulose-Ester a) einen Substitutionsgrad von 1,0 - 3,0 Acylgruppen pro Anhydro-Glucose-Einheit aufweist.

7. Cellulose-Ester-Zubereitung gemäß wenigstens einem der Ansprüche 1 bis 6, **dadurch gekennzeichnet, dass** die Zubereitung 5 - 60 Gewichtsteile, vorzugsweise 10 bis 50 Gewichtsteile an mindestens einem phosphorhaltigen Propionsäurederivats der Formel (I) bezogen auf 100 Gewichtsteile Cellulose-Ester enthält.

8. Cellulose-Ester-Zubereitung gemäß wenigstens einem der Ansprüche 1 bis 7, **dadurch gekennzeichnet, dass** sie mindestens einen Hilfs- oder Zusatzstoff, vorzugsweise aus der Gruppe der Weichmacher, UV-Stabilisatoren und/oder Antioxidantien, thermischen Stabilisatoren, Farbmitteln, Füllstoffe, Polymeren, Treibmitteln, Duftstoffen, Bioziden, Pestiziden, Verarbeitungshilfsmitteln, Gleitmitteln und Flammschutzmitteln, enthält.

9. Verfahren zur Herstellung einer Cellulose-Ester-Zubereitung gemäß wenigstens einem der Ansprüche 1 bis 8, **dadurch gekennzeichnet, dass** a) mindestens ein Cellulose-Ester, b) mindestens ein phosphorhaltiges Propionsäurederivat der Formel (I), gegebenenfalls ein oder mehrere Lösungsmittel und gegebenenfalls eine oder mehrere Hilfs- und/oder Zusatzstoffe miteinander vermischt werden.

10. Lösung enthaltend mindestens eine Cellulose-Ester-Zubereitung gemäß wenigstens einem der Ansprüche 1 bis 8 und mindestens ein organisches Lösungsmittel, insbesondere mindestens ein Lösungsmittel aus der Reihe Methanol, Ethanol, Isopropanol, Aceton, Butanon, Ethylacetat, Butylacetat, Dichlormethan und Toluol.

11. Verwendung von phosphorhaltigen Propionsäurederivaten der Formel (I) gemäß Anspruch 1 als Flammschutzmittel mit weichmachenden Eigenschaften für Cellulose-Ester-Zubereitungen.

12. Verwendung einer Cellulose-Ester-Zubereitung gemäß wenigstens einem der Ansprüche 1 bis 8 oder der Lösungen gemäß Anspruch 10 zur Herstellung von flammwidrig ausgerüsteten Formteilen, Folien, Filme, Beschichtungen, Lacke und Fasern.

13. Formteile, Folien, Filme, Beschichtungen, Lacke und Fasern auf Basis von Cellulose-Ester-Zubereitungen gemäß wenigstens einem der Ansprüche 1 bis 8 oder der Lösungen gemäß Anspruch 10.

14. Verwendung von Formteilen gemäß Anspruch 13 zur Herstellung von Gehäuseteilen, Schaltern, Steckern, Dämmstoffen, Verkleidungen, Einstiegsleisten, Fußmatten, Kofferraumteppichen, Sitzbezügen, Karosserieteilen, Spoilern oder Zierleisten.

15. Phosphorhaltige Propionsäurederivate der Formel (I) gemäß Anspruch 1,
worin
X für O steht,
R für H steht,
A für O steht,
n für 1 steht, und
Z für einen 2-Ethylhexyl-, Isooctyl-, n-Nonyl-, Isononyl-, 2-Propylheptyl-, n-Decyl- oder Isodecylrest steht.

16. Phosphorhaltige Propionsäureester der Formel (I) gemäß Anspruch 1,
worin
X für O steht,
R für H steht,
A für O steht,
n für 2 steht, und
Z für einen Rest -CH₂CH₂-, -CH₂CH₂CH₂-, -CH₂CH(CH₃) -, -CH₂CH₂CH₂CH₂-, -CH₂CH₂CH(CH₃)-, -CH₂C(CH₃)₂CH₂-, -CH₂CH₂CH₂CH₂CH₂CH₂- oder -CH₂CH₂-O-CH₂CH₂- steht.

## Claims

1. Cellulose ester preparation, **characterized in that** it contains
a) at least one cellulose ester, and
b) at least one phosphorus-containing propionic acid derivative of formula (I) 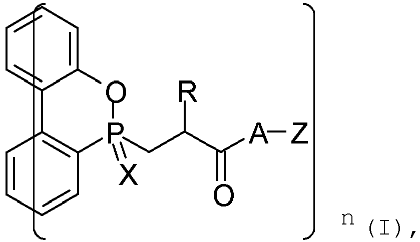 where
X represents oxygen or sulphur, preferably oxygen,
R represents hydrogen or methyl, preferably hydrogen,
A represents oxygen or NH, preferably oxygen,
Z represents an n-valent saturated, straight-chain or branched, aliphatic hydrocarbyl moiety of 1 - 20 carbon atoms which is optionally interrupted by one or more heteroatoms from the series oxygen and sulphur, or an n-valent 5- or 6-membered heterocyclic ring which contains one to three nitrogen atoms as heteroatoms and is optionally substituted by one or more identical or different substituents,
and n represents an integer from 1 to 4.

2. Cellulose ester preparation according to Claim 1, **characterized in that** it contains at least one phosphorus-containing propionic acid derivative of formula (I) according to Claim 1
where
X represents oxygen,
R represents hydrogen, and
A represents oxygen.

3. Cellulose ester preparation according to either or both of Claims 1 and 2, **characterized in that** it contains at least one phosphorus-containing propionic acid derivative of formula (I) according to Claim 1 where
Z represents an n-valent saturated, straight-chain or branched, aliphatic hydrocarbyl moiety of 1 to 6 carbon atoms which is optionally interrupted by one or two oxygen atoms, or an n-valent 5- or 6-membered heterocyclic ring which contains one to three nitrogen atoms as heteroatoms and is optionally substituted by one to three identical or different substituents.

4. Cellulose ester preparation according to one or more of Claims 1 to 3, **characterized in that** it contains
a) at least one phosphorus-containing propionic acid derivative of formula (I) according to Claim 1
where
X represents oxygen,
R represents hydrogen,
A represents oxygen,
n represents 1,
and
Z represents methyl, ethyl, n-propyl, isopropyl, n-butyl, isobutyl, 2-ethylhexyl, isooctyl, n-nonyl, isononyl, 2-propylheptyl, n-decyl or isodecyl,
and/or
b) at least one phosphorus-containing propionic acid derivative of formula (I) according to Claim 1
where
X represents oxygen,
R represents hydrogen,
A represents oxygen,
n represents 2,
and
Z represents -CH₂CH₂-, -CH₂CH₂CH₂-, -CH₂CH(CH₃) -, -CH₂CH₂CH₂CH₂-, -CH₂CH₂CH(CH₃)-, -CH₂C(CH₃)₂CH₂-, -CH₂CH₂CH₂CH₂CH₂CH₂- or -CH₂CH₂-O-CH₂CH₂-,
and/or
c) at least one phosphorus-containing propionic acid derivative of formula (I) according to Claim 1
where
X represents oxygen,
R represents hydrogen,
A represents oxygen,
n represents 3, and
Z represents (-CH₂)₃CCH₃ or 1, 3, 5-tris(ethylene)-1,3,5-triazine-2,4,6-trione,
and/or
d) at least one phosphorus-containing propionic acid derivative of formula (I) according to Claim 1
where
X represents oxygen,
R represents hydrogen,
A represents oxygen,
n represents 4, and
Z represents (-CH₂)₄C.

5. Cellulose ester preparation according to one or more of Claims 1 to 4, **characterized in that** its cellulose ester a) content comprises one or more esters selected from the group consisting of cellulose acetate, cellulose triacetate, cellulose propionate, cellulose butyrate, cellulose acetate propionate or cellulose acetate butyrate, cellulose acetate phthalate, carboxymethylcellulose acetate and carboxymethylcellulose butyrate.

6. Cellulose ester preparation according to one or more of Claims 1 to 5, **characterized in that** the degree of substitution of cellulose ester a) is 1.0 - 3.0 acyl groups per anhydroglucose unit.

7. Cellulose ester preparation according to one or more of Claims 1 to 6, **characterized in that** said preparation contains 5 - 60 parts by weight, preferably 10 to 50 parts by weight, of at least one phosphorus-containing propionic acid derivative of formula (I) based on 100 parts by weight of cellulose ester.

8. Cellulose ester preparation according to one or more of Claims 1 to 7, **characterized in that** it contains at least one auxiliary or added-substance material, preferably from the group of plasticizers, UV stabilizers and/or antioxidants, thermal stabilizers, colorants, fillers, polymers, blowing agents, scents, biocides, pesticides, processing aids, lubricants and flame retardants.

9. Process for producing a cellulose ester preparation according to one or more of Claims 1 to 8, **characterized in that** a) at least one cellulose ester, b) at least one phosphorus-containing propionic acid derivative of formula (I), optionally one or more solvents and optionally one or more auxiliary and/or added-substance materials are mixed together.

10. Solution containing at least one cellulose ester preparation according to one or more of Claims 1 to 8 and at least one organic solvent, in particular at least one solvent from the series methanol, ethanol, isopropanol, acetone, butanone, ethyl acetate, butyl acetate, dichloromethane and toluene.

11. Use of phosphorus-containing propionic acid derivatives of formula (I) according to Claim 1 as flame retardants with plasticizing properties for cellulose ester preparations.

12. Use of a cellulose ester preparation according to one or more of Claims 1 to 8 or of solutions according to Claim 10 in the manufacture of flame-retarded mouldings, sheets, films, coatings, paints and fibres.

13. Mouldings, sheets, films, coatings, paints and fibres based on cellulose ester preparations according to one or more of Claims 1 to 8 or on solutions according to Claim 10.

14. Use of mouldings according to Claim 13 in the manufacture of housing parts, switches, plugs, insulants, interior trim, sill plates, foot mats, trunk carpets, seat covers, carbody parts, spoilers or exterior trim strips.

15. Phosphorus-containing propionic acid derivatives of formula (I) according to Claim 1,
where
X represents oxygen,
R represents hydrogen,
A represents oxygen,
n represents 1, and
Z represents 2-ethylhexyl, isooctyl, n-nonyl, isononyl, 2-propylheptyl, n-decyl or isodecyl.

16. Phosphorus-containing propionic acid esters of formula (I) according to Claim 1
where
X represents oxygen,
R represents hydrogen,
A represents oxygen,
n represents 2, and
Z represents -CH₂CH₂-, -CH₂CH₂CH₂-, -CH₂CH(CH₃) -, -CH₂CH₂CH₂CH₂-, -CH₂CH₂CH(CH₃)-, -CH₂C(CH₃)₂CH₂-, -CH₂CH₂CH₂CH₂CH₂CH₂- or -CH₂CH₂-O-CH₂CH₂-.

## Revendications

1. Préparation d'ester de cellulose, **caractérisée en ce qu'**elle contient
a) au moins un ester de cellulose et
b) au moins un dérivé de l'acide propionique contenant du phosphore de formule (I) 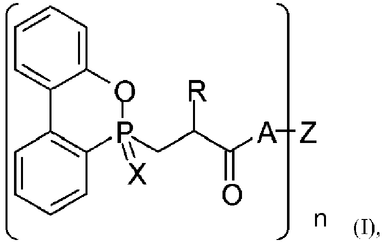 dans laquelle
X représente oxygène ou soufre, de préférence oxygène,
R représente hydrogène ou méthyle, de préférence hydrogène,
A représente oxygène ou NH, de préférence oxygène,
Z représente un radical hydrocarboné aliphatique, n-valent, saturé, linéaire ou ramifié, comprenant 1-20 atomes de carbone, qui est le cas échéant interrompu par un ou plusieurs hétéroatomes de la série oxygène et soufre, ou un cycle hétérocyclique de 5 ou 6 chaînons, n-valent, le cas échéant monosubstitué ou polysubstitué de manière identique ou différente, qui contient comme hétéroatomes un à trois atomes d'azote et
n représente un nombre entier de 1 à 4.

2. Préparation d'ester de cellulose selon la revendication 1, **caractérisée en ce qu'**elle contient au moins un dérivé de l'acide propionique contenant du phosphore de formule (I) selon la revendication 1, dans laquelle
X représente oxygène,
R représente hydrogène et
A représente oxygène.

3. Préparation d'ester de cellulose selon au moins l'une quelconque des revendications 1 ou 2, **caractérisée en ce qu'**elle contient au moins un dérivé de l'acide propionique contenant du phosphore de formule (I) selon la revendication 1, dans laquelle
Z représente un radical hydrocarboné aliphatique, n-valent, saturé, linéaire ou ramifié, comprenant 1 à 6 atomes de carbone qui est le cas échéant interrompu par un ou deux atomes d'oxygène, ou un cycle hétérocyclique de 5 ou 6 chaînons, n-valent, le cas échéant monosubstitué à trisubstitué de manière identique ou différente, qui contient comme hétéroatomes un à trois atomes d'azote.

4. Préparation d'ester de cellulose selon au moins l'une quelconque des revendications 1 à 3, **caractérisée en ce qu'**elle contient
a) au moins un dérivé de l'acide propionique contenant du phosphore de formule (I) selon la revendication 1, dans laquelle
X représente oxygène,
R représente hydrogène,
A représente oxygène,
n représente 1 et
Z représente un radical méthyle, éthyle, n-propyle, isopropyle, n-butyle, isobutyle, 2-éthylhexyle, isooctyle, n-nonyle, isononyle, 2-propylheptyle, n-décyle ou isodécyle,
et/ou
b) au moins un dérivé de l'acide propionique contenant du phosphore de formule (I) selon la revendication 1, dans laquelle
X représente oxygène,
R représente hydrogène,
A représente oxygène,
n représente 2 et
Z représente -CH₂CH₂-, -CH₂CH₂CH₂-, -CH₂CH(CH₃) -, -CH₂CH₂CH₂CH₂-, -CH₂CH₂CH(CH₃)-, -CH₂C(CH₃)₂CH₂-, -CH₂CH₂CH₂CH₂CH₂CH₂- ou -CH₂CH₂-O-CH₂CH₂-,
et/ou
c) au moins un dérivé de l'acide propionique contenant du phosphore de formule (I) selon la revendication 1, dans laquelle
X représente oxygène,
R représente hydrogène,
A représente oxygène,
n représente 3 et
Z représente (-CH₂)₃CCH₃ ou 1,3,5-tris(éthylène)-1,3,5-triazine-2,4,6-trione,
et/ou
d) au moins un dérivé de l'acide propionique contenant du phosphore de formule (I) selon la revendication 1, dans laquelle
X représente oxygène,
R représente hydrogène,
A représente oxygène,
n représente 4 et
Z représente (-CH₂)₄C.

5. Préparation d'ester de cellulose selon au moins l'une quelconque des revendications 1 à 4, **caractérisée en ce qu'**elle contient, comme ester de cellulose a), un ou plusieurs esters choisis dans le groupe constitué par l'acétate de cellulose, le triacétate de cellulose, le propionate de cellulose, le butyrate de cellulose, l'acétate-propionate de cellulose ou l'acétate-butyrate de cellulose, l'acétate-phtalate de cellulose, l'acétate de carboxyméthylcellulose et le butyrate de carboxyméthylcellulose.

6. Préparation d'ester de cellulose selon au moins l'une quelconque des revendications 1 à 5, **caractérisée en ce que** l'ester de cellulose a) présente un degré de substitution de 1,0-3,0 groupes acryle par unité d'anhydroglucose.

7. Préparation d'ester de cellulose selon au moins l'une quelconque des revendications 1 à 6, **caractérisée en ce que** la préparation contient 5-60 parties en poids, de préférence 10 à 50 parties en poids, d'au moins un dérivé de l'acide propionique contenant du phosphore de la formule (I) par rapport à 100 parties en poids d'ester de cellulose.

8. Préparation d'ester de cellulose selon au moins l'une quelconque des revendications 1 à 7, **caractérisée en ce qu'**elle contient au moins un adjuvant ou additif, de préférence du groupe des plastifiants, des stabilisants aux UV et/ou des antioxydants, des stabilisants thermiques, des colorants, des charges, des polymères, des agents gonflants, des parfums, des biocides, des pesticides, des adjuvants de transformation, des lubrifiants et des agents ignifuges.

9. Procédé pour la préparation d'une préparation d'ester de cellulose selon au moins l'une quelconque des revendications 1 à 8, **caractérisé en ce que** a) au moins un ester de cellulose, b) au moins un dérivé de l'acide propionique contenant du phosphore de formule (I), le cas échéant un ou plusieurs solvants et le cas échéant un ou plusieurs adjuvants et/ou additifs sont mélangés les uns avec les autres.

10. Solution contenant au moins une préparation d'ester de cellulose selon au moins l'une quelconque des revendications 1 à 8 et au moins un solvant organique, en particulier au moins un solvant de la série constituée par le méthanol, l'éthanol, l'isopropanol, l'acétone, la butanone, l'acétate d'éthyle, l'acétate de butyle, le dichlorométhane et le toluène.

11. Utilisation de dérivés de l'acide propionique contenant du phosphore de formule (I) selon la revendication 1 comme agents ignifuges présentant des propriétés plastifiantes pour des préparations d'ester de cellulose.

12. Utilisation d'une préparation d'ester de cellulose selon au moins l'une quelconque revendication 1 à 8 ou des solutions selon la revendication 10 pour la préparation de pièces façonnées, de feuilles, de films, de revêtements, de laques et de fibres apprêtés manière ignifugée.

13. Pièces façonnées, feuilles, films, revêtements, laques et fibres à base de préparations d'ester de cellulose selon au moins l'une quelconque revendication 1 à 8 ou de solutions selon la revendication 10.

14. Utilisation de pièces façonnées selon la revendication 13 pour la fabrication de parties de boîtier, d'interrupteurs, de prises, de matériaux isolants, de revêtements, de baguettes de seuil, de tapis de sol, de tapis pour coffres de voiture, de revêtements de siège, de pièces de carrosserie, de spoilers ou de baguettes décoratives.

15. Dérivés de l'acide propionique contenant du phosphore de formule (I) selon la revendication 1, dans laquelle
X représente O,
R représente H,
A représente O,
n représente 1 et
Z représente un radical 2-éthylhexyle, isooctyle, n-nonyle, isononyle, 2-propylheptyle, n-décyle ou isodécyle.

16. Esters de l'acide propionique contenant du phosphore de formule (I) selon la revendication 1, dans laquelle
X représente O,
R représente H,
A représente O,
n représente 2 et
Z représente un radical -CH₂CH₂-, -CH₂CH₂CH₂-,-CH₂CH(CH₃)-, -CH₂CH₂CH₂CH₂-, CH₂CH₂CH(CH₃)-,-CH₂C(CH₃)₂CH₂-, -CH₂CH₂CH₂CH₂CH₂CH₂- ou CH₂CH₂-O-CH₂CH₂-.
